# EUROPÄISCHE PATENTSCHRIFT

(11) **EP 0 651 576 B1**
(45) Veröffentlichungstag und Bekanntmachung des Hinweises auf die Patenterteilung: **01.09.1999**
(21) Anmeldenummer: 94108839.5
(22) Anmeldetag: 09.06.1994
(51) Int. Cl.: H04N 7/22, H04J 14/00, H04N 7/10

(54) **Rundfunk und Fernsehverteilnetz**
Network distribution for broadcasting and television
Réseau de distribution de radio diffusion et télévision

(30) Priorität: 30.10.1993 DE 4337138
(43) Veröffentlichungstag der Anmeldung: 03.05.1995
(73) Patentinhaber: ROBERT BOSCH GMBH, 70442 Stuttgart (DE)
(72) Erfinder: Göckler, Heinz, Dr., D-71522 Backnang (DE); Grotz, Karlheinz, D-70734 Fellbach (DE); Süssmeier, Georg, D-71522 Backnang (DE)

(56) Entgegenhaltungen:
- EP-A- 0 446 613
- FR-A- 2 558 674

## Beschreibung

Die Erfindung bezieht sich auf ein Rundfunk- und Fernsehverteilnetz zur Verteilung eines FDM(Frequency Division Multiplex) -Signals mit hoher Kanalzahl gemäß Oberbegriff des Anspruches 1 bzw. 2.

Durch die deutsche Patentschrift 40 08 201 ist ein Verfahren zur Aufbereitung von mehreren Fernsehsignalen für Übertragungszwecke und deren empfangsseitige Nachbearbeitung, insbesondere für ein Verteilnetz, sowie Anwendung in einem Verteilnetz bekannt geworden. Damit sind Komponenten für ein Verteilnetz vorgestellt worden, die konkrete und in der Praxis durchführbare Realisierung eines aufwandsgünstigen Systemkonzepts für komplette Verteilnetze fehlen jedoch.

Aus der FR-A-2558674 ist eine TV-Verteilnetz bekannt, wobei Kanäle, bzw. Kanalgruppen zu Frequenzmultiplex (FDM) -Signalen zusammengefaßt werden. Über Selektionsschalter erfolgt die Auswahl der zu FDM-Signalen zusammenzusetzenden Einzelsignalen. Empfangsseitig erfolgt für Einzelteilnehmer wieder eine entsprechende Aufsplittung.

Die EP-A-0 446613, die im Oberbegriff der unabhängigen Ansprüche gewürdigt ist, zeigt bei einer einstufigen Frequenzumsetzung die digitale Addition von TV-Signalen bzw. Signalgruppen auf der Sendeseite. Auf der Empfangsseite erfolgt eine entsprechende Zerlegung mittels eines Demultiplexers. Eine Neuzusammensetzung eines Frequenzmultiplexsignals oder ein Austausch bestimmter Kanäle erfolgt dort nicht.

Der Erfindung liegt die Aufgabe zugrunde, ein Verteilnetz der eingangs genannten Art anzugeben, welches die konkrete und praktisch ausführbare Realisierung eines aufwandsgünstigen Systemkonzepts darstellt. Dabei soll die optimale Versorgung eines Gebiets sowie die gute Signalqualität durch den durchgängigen Einsatz der digitalen Signalverarbeitung erreicht bzw. aufrecht erhalten werden.

Die Lösung dieser Aufgabe erfolgt durch die Merkmale des Anspruches 1 bzw. 2. Vorteilhafte Ausgestaltungen ergeben sich durch die Unteransprüche.

Das erfindungsgemäße Rundfunk- und Fernsehverteilnetz stellt eine konkrete und praktisch durchführbare Realisierung eines aufwandsgünstigen Systemkonzepts dar. Das Verteilnetz ermöglicht die optimale Versorgung eines Gebiets und Aufrechterhaltung der guten Signalqualität durch den durchgängigen Einsatz der digitalen Signalverarbeitung. Das Verteilnetz weist außerdem ein hohes Maß an Flexibilität und Konfigurationsmöglichkeit auf: An beliebigen Stellen des Verteilnetzes wird der lokale Austausch von Programmen fast beliebig ermöglicht.

Es folgt nun die Beschreibung der Erfindung anhand der Figuren.

Figur 1 zeigt als Ausführungsbeispiel die erfindungsgemäße Anordnung eines digitalen Frequenzmultiplexumsetzers DFMU, welcher in der zentralen Station eines Glasfaser-Verteilnetzes gemäß Figur 2 und 4 zum Einsatz kommt.

Figur 3 veranschaulicht die Basisfunktionen eines Drop-Add-Multiplexers DAMUX. In den Figuren 5a und 5b sind vorteilhafte Ausführungsbeispiele für Einzelkanalbandfilter und deren Anwendung in einem DAMUX gezeichnet.

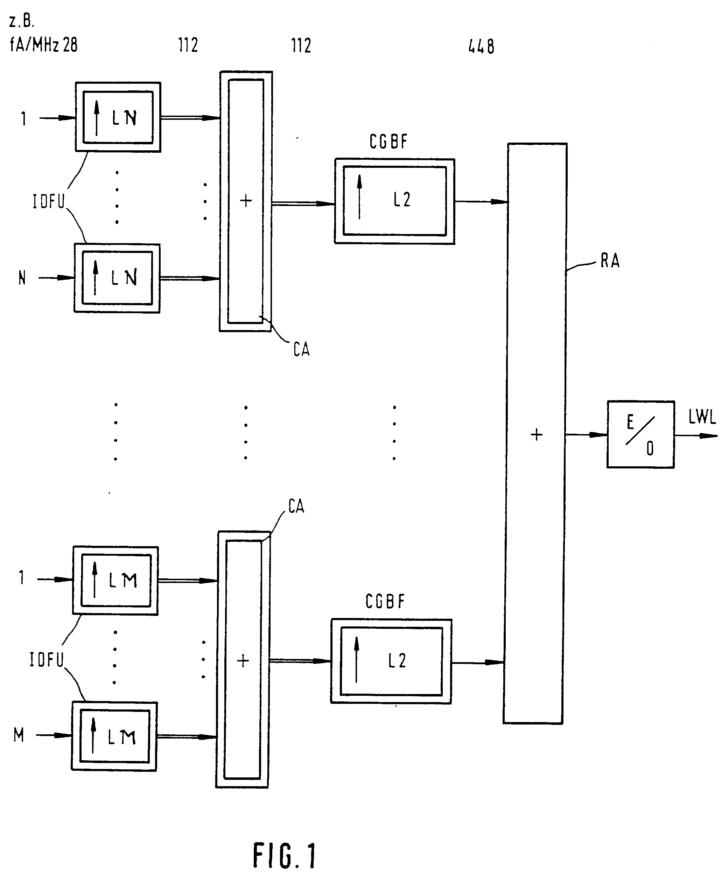

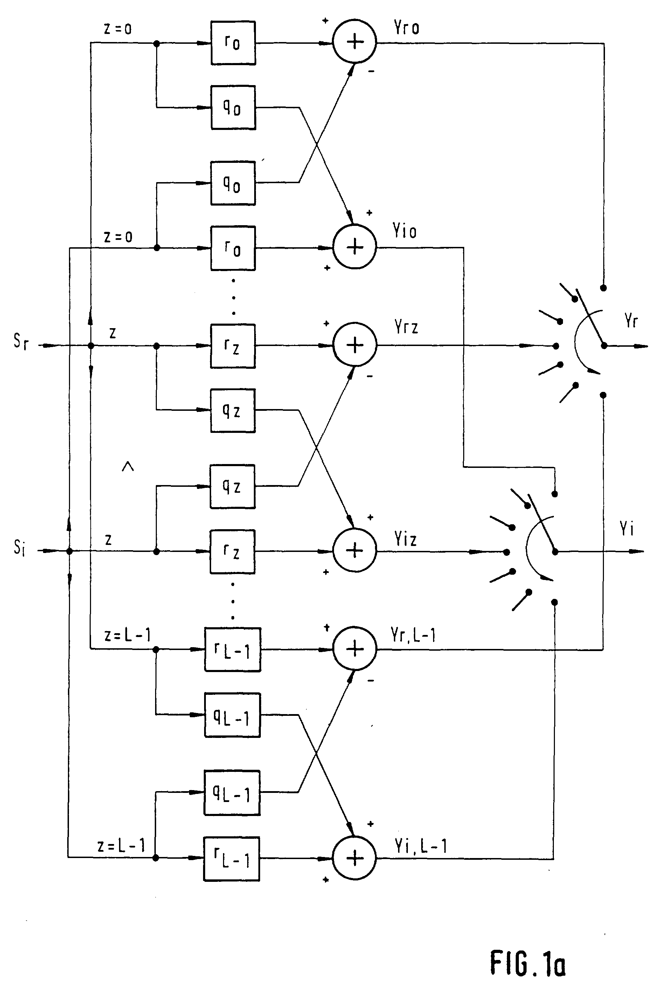

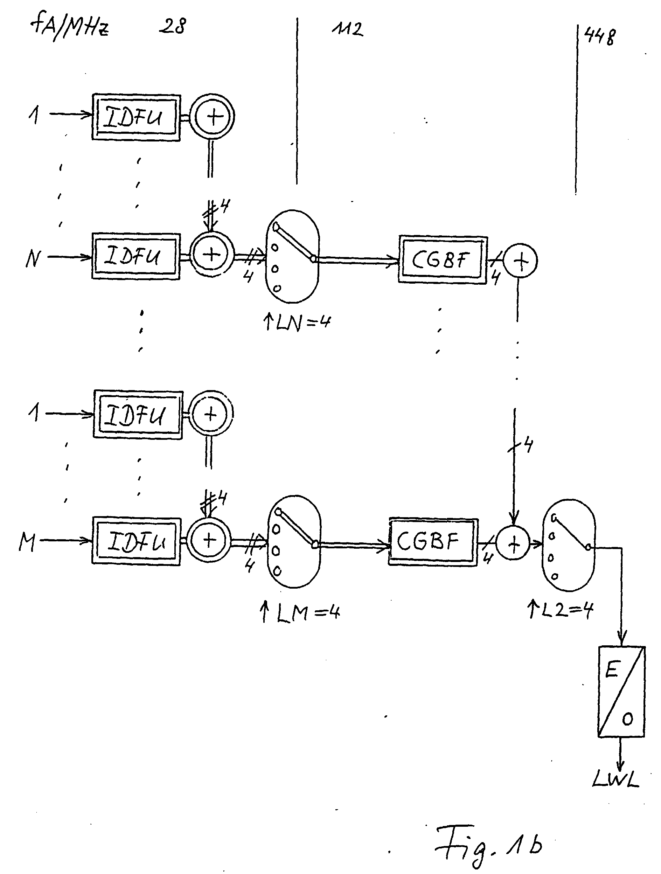

In Figur 1 ist erkennbar, wie eine erste Gruppe von 1 bis N Kanälen jeweils mittels eines interpolierenden digitalen Frequenzumsetzers IDFU unter Erhöhung der Abtastrate beispielsweise von 28 MHz auf 112 MHz, also um den Faktor LN = 4, umgesetzt werden, um anschließend mittels eines komplexen Addierers CA zusammengefaßt zu werden. Dieses zusammengefaßte Signal wird anschließend einem komplexen Gruppenbandfilter CGBF zugeführt, welches unter Erhöhung der Abtastrate beispielsweise auf 448 MHz, also um den Faktor L2 = 4, filtert. In dem unteren Zweig erfolgt das hier Beschriebene für eine andere Gruppe von M-Kanälen, wobei die Eingangsabtastfrequenz um den Faktor LM ( 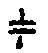 oder = LN) auf den gleichen Wert (im Beispiel: 112 MHz)erhöht wird. Die Ausgangssignale der einzelnen komplexen Gruppenbandfilter CGBF werden mittels eines reellen Addierers RA zu dem FDM-Signal zusammengefaßt, welches nach einer elektrooptischen Wandlung I/O über einen Lichtwellenleiter LWL übertragen wird. Die Figur 1.a zeigt die Realisierung eines Polyphasenfilternetzwerkes für komplexe Eingangs- und Ausgangssignale mit allgemeiner Zweigfilterstruktur, welches den Vorteil hat, daß die arithmetischen Operationen bei der niedrigen Abtastrate erfolgen und daß lediglich eine Minimalzahl von Multiplexern zur zeitlichen Verschachtelung der Teilsignale zur Erhöhung der Abtastfrequenz um den Faktor L benötigt wird.

Bei einer Kombination der Fig. 1 mit Fig. 1a sind für jeden IDFU ein Paar von Zeit-Multiplexern (zur zeitlichen Verschachtelung) nötig, und die Operation komplexes Addieren CA muß bei der erhöhten Abtastrate 112 MHz durchgeführt werden. Entsprechend ist auch für jedes Gruppenbandfilter ein Zeitmultiplexer erforderlich, und die Operation Addieren RA wird bei der zusätzlich um L2 erhöhten Abtastrate 448 MHz durchgeführt.
Die Fig. 1b schafft Abhilfe. Hier ist im Unterschied zu Fig. 1 die Operation Addition CA über den zugehörigen Multiplexer zu der jeweils tieferen, also noch nicht erhöhten Abtastfrequenz heruntergezogen worden. Dies gilt für alle zu einer Gruppe N bzw. M gehörenden IDFUs. Die komplexe Addition wurde in eine Anzahl N bzw. M (N-1, M-1) Zweier-Addierer aufgeteilt für jede der hier 8 (4x2) Einzelleitungen.
Die gleichen Maßnahmen wurden auch in der zweiten Stufe bei den Gruppen-Bandfiltern CGBF angewendet. Die Erhöhung der Abtastrate um L2=4 erfolgt hier ebenfalls erst nach der Addition.

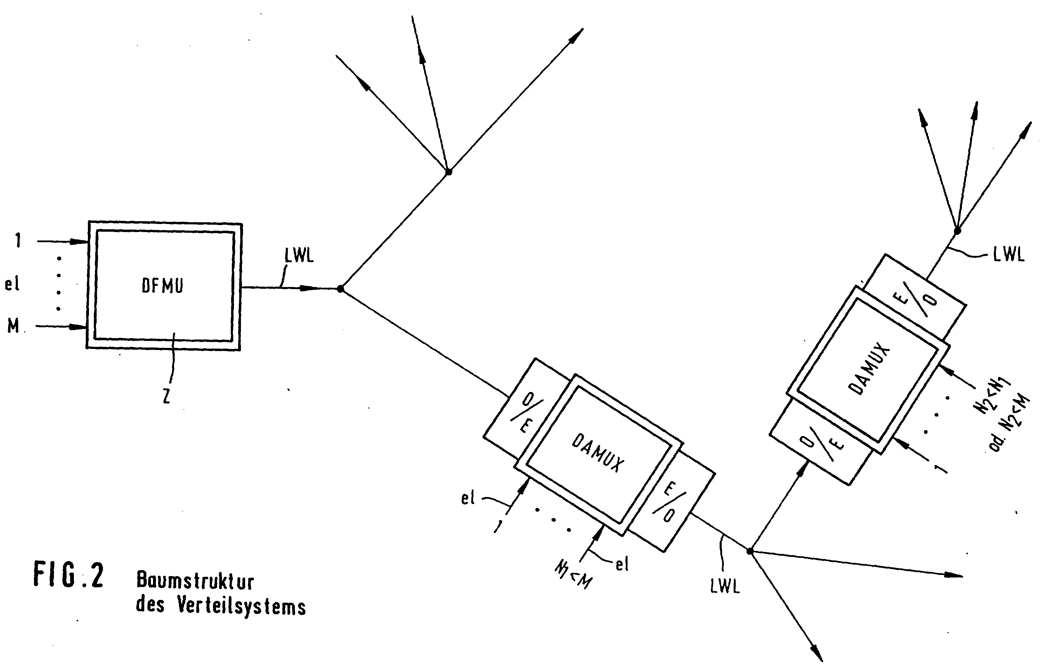

In Figur 2 ist als Ausführungsbeispiel eine Baumstruktur des Verteilsystems dargestellt. Links ist eine zentrale Station.Z mit einem digitalen Frequenzmultiplexumsetzer DFMU erkennbar, welcher M-Kanäle frequenzumsetzt und zu dem FDM-Signal zusammenfaßt, welches über einen elektrooptischen Wandler auf ein Glasfasernetz LWL gegeben wird. An weiteren Stationen S1 und S2 sind jeweils im Zuge der Glasfaser zwischen einem optoelektrischen und einem elektrooptischen Wandler ein Drop-Add-Multiplexer DAMUX eingefügt, welcher beispielsweise neue Kanäle in Lücken einspeist, unerwünschte Kanäle oder Programme eliminiert und ggf. durch andere ersetzt. Auf diese Weise kann weitgehend beliebigen lokalen Programmwünschen entsprochen werden. Bei dem Ausführungsbeispiel werden bei Station S1 eine Anzahl N1 < M neuer Kanäle und bei der Station S2 eine Anzahl N2 < N1 oder < M neuer Kanäle eingespeist.

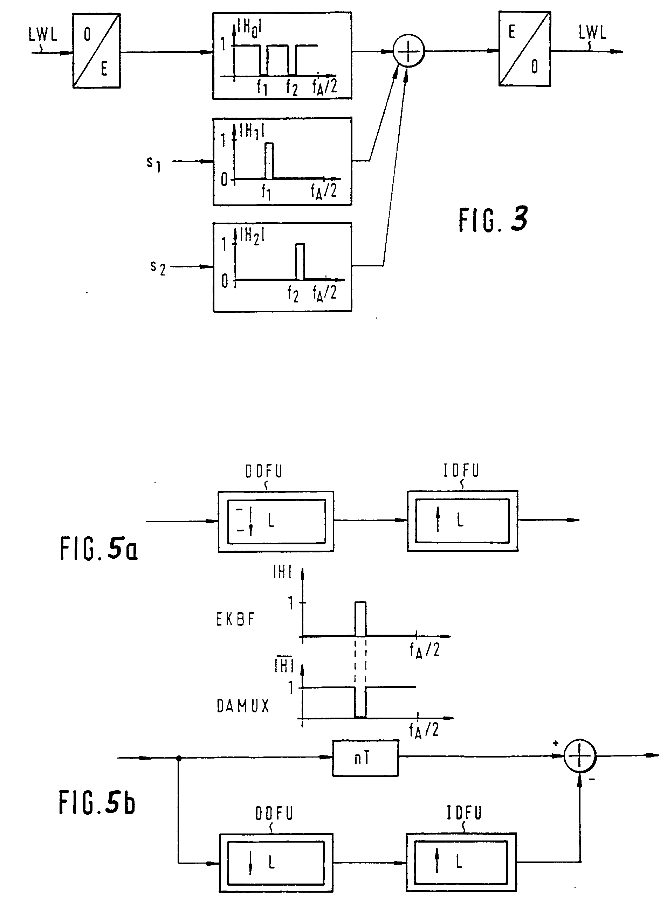

Die Figur 3 veranschaulicht die Basisfunktionen des DAMUX. Der DAMUX ist transparent für alle Kanäle, die nicht durch den jeweiligen DAMUX ersetzt werden, das sind alle Kanäle außer f1 und f2. Die Signale s₁ eines ersten einzuspeisenden Kanals sowie die Signale s₂ eines zweiten Kanals werden durch den DAMUX auf die entsprechenden Frequenzplätze f₁ bzw. f₂ umgesetzt und anschließend über ein Summierglied zu dem transparent durchgelassenen empfangenen Signal des oberen Zweiges zu dem FDM-Signal zusammengefaßt, welches anschließend über einen elektrooptischen Wandler auf die Glasfaser LWL gesendet wird.

Wird der DAMUX gemäß Figur 3 über einen Glasfaserring rückgekoppelt, so wird das System möglicherweise instabil, da die Schleifendämpfung in weiten Frequenzbereichen den Wert 0 db (Schleifenverstärkung v0 = 1) aufweist und somit in diesen ungedämpften Frequenzbereichen stets vorhandenes Quantisierungsrauschen mit der Schleifenübertragungsfunktion Hₛ = 1/(1-v0) gegen unendlich verstärkt wird. Auch beim Einsatz mehrerer DAMUX im Ring kann man nicht generell davon ausgehen, daß alle Kanäle mit Programmen belegt sind, denn nur in diesen Kanälen wird die Schleifenverstärkung << 1. Eine Lösung dieses Randproblems besteht darin, wenigstens bei einem DAMUX im elektrischen Pfad eine digitale Multiplikation mit dem Faktor γ < 1 einzufügen. γ sollte so gewählt werden, daß sich an bestimmten Abgriffsstellen die Pegel der Kanalsignale möglichst wenig unterscheiden. Andererseits sollte γ möglichst nahe an 0 sein, um das Rauschen nicht zu verstärken in den nichtbelegten Kanälen; γ kleiner ungefähr 0,5 wird als ausreichend erachtet. Für eine günstige Realisierung wird eine Multiplikation mit 0,5, 0,75 bzw. 0,875 angesehen, welche mit wenigen shifts und Additionen durchführbar sind.

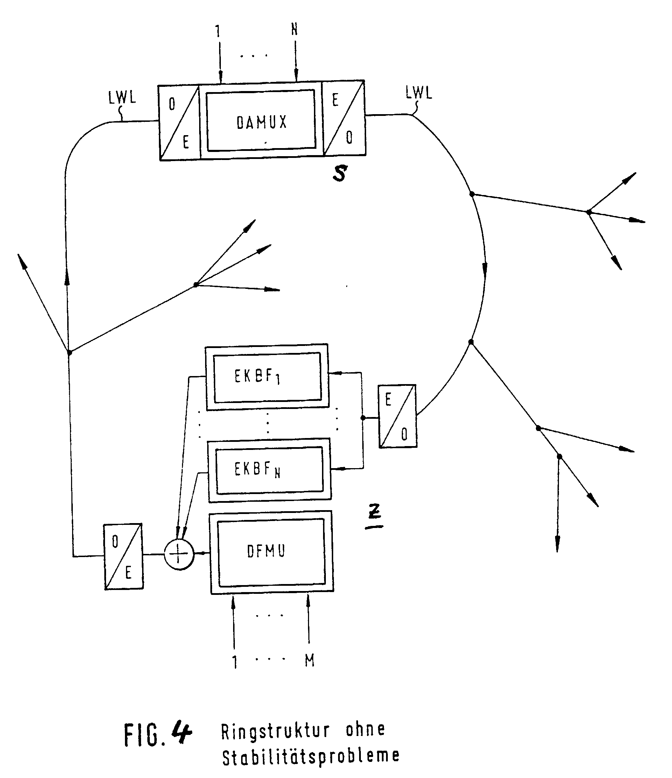

Mit der Ringstruktur nach Figur 4 läßt sich das Stabilitätsproblem gänzlich eliminieren, ohne daß die Flexibilität und Verfügbarkeit des Systems beeinträchtigt wird. Bei der zentralen Station Z fällt die größte Anzahl von einzuspeisenden Programmen an; die Einspeisung erfolgt vorteilhafterweise durch einen digitalen Frequenzmultiplexumsetzer DFMU, welcher M Kanäle umsetzt und in den Ring einspeist, selbst aber nicht Teil der Ringstruktur ist. Der Ring wird geschlossen über einen DAMUX der Station S für N einzuspeisende Kanäle und über N Einzelkanalbandfilter EKBF 1 bis N EKBF bei der zentralen Station Z, welche jeweils nur für die einzelnen Kanäle um F1 bis FN transparent sind und ihre Ausgangssignale über ein Summierglied, in das auch die M Kanäle eingespeist werden, das FDM-Signal der linken Ringhälfte ergeben. Genau in den Frequenzbereichen F1 bis FN sperrt aber der DAMUX der Station S. Damit ist im Ring der Figur 4 im gesamten Frequenzband die Schleifenverstärkung klein gegen 1, weshalb prinzipiell keine Instabilitäten auftreten können. Dies gilt auch bei Anordnung von mehreren DAMUXen im Ring.

Eine effiziente und aufwandsgünstige Realisierung für das Einzelkanalbandfilter EKBF bietet die Anordnung nach Figur 5a, wobei ein dezimierender digitaler Frequenzumsetzer DDFU mit einem interpolierenden digitalen Frequenzumsetzer IDFU kaskadiert wird. Darunter ist die Übertragungsfunktion |H| gezeichnet, welche die Transparenz nur für die Kanalfrequenz fi zeigt. Wiederum darunter ist die dazu komplementäre Übertragungsfunktion eines DAMUX gezeichnet, welche alle Kanäle ungedämpft durchläßt, jedoch den Kanal um die Frequenz fi sperrt. Dies wird dadurch erreicht, daß von dem ankommenden FDM-Signal die Übertragungsfunktion des Einzelkanalbandfilters EKBF subtrahiert wird. Zur Kompensation der Laufzeit durch das Einzelkanalbandfilter wird das ankommende FDM-Signal vor der Differenzbildung um einen entsprechenden Laufzeitbetrag n · T verzögert.

Eine weitere Ausgestaltung der Ringstruktur nach Figur 4 besteht darin, statt einer Glasfaser LWL deren zwei im Ring zu verlegen. Im Falle der unbeabsichtigten Durchtrennung beider Glasfasern an einer Stelle, beispielsweise hervorgerufen durch Bauarbeiten, besteht die Möglichkeit, durch geeignete Einspeisung über DFMU bzw. DAMUX in die noch vorhandenen Glasfaserstücke und durch geeignete Verschaltung derselben nach wie vor alle Orte mit allen Programmen zu versorgen.

Ein entsprechendes System läßt sich gleichermaßen mit Cu-(Koax-) Kabeln aufbauen, wenn LWL durch entsprechende Kabel ersetzt werden. Dabei entfallen alle E/O- und O/E- Blöcke: Übertragung des digitalisierten FDM-Signals. Ersetzt man E/O durch D/A-Umsetzer und O/E- durch A/D-Umsetzer, so erfolgt die Kabelübertragung analog, während die Signalverarbeitung weiterhin digital durchgeführt wird mit allen Vorteilen wie: bessere Signalqualität, Reproduzierbarkeit, hohe Flexibilität (auch über Fernsteuerung) etc.

## Patentansprüche

1. RF- und TV-Verteilnetz zur Verteilung eines FDM (Frequency-Division-Multiplex)-Signales mit hoher Kanalzahl, mit einer (zentralen) Station, in der Signale von M-Kanälen bzw. Kanalgruppen frequenzumgesetzt und zu dem FDM-Signal zusammengefaßt werden, das in das Netz eingespeist wird, mit weiteren Stationen, in denen das ankommende FDM-Signal so aufbereitet wird, daß die Signale einer Anzahl Ni weiterer Kanäle zusätzlich oder an freien Frequenzkanälen oder anstelle der Signale frei auswählbarer, besetzter Kanäle in das neue FDM-Signal aufnehmbar sind, mit Teilnehmereinrichtungen, in denen das FDM-Signal in die einzelnen Kanal- bzw. Kanalgruppensignale so zerlegt bzw. aufbereitet wird, daß der Teilnehmer auf sie zugreifen kann, wobei
mindestens in der zentralen Station zur Frequenzumsetzung und zur Zusammenfassung der Signale der M Kanäle bzw. Kanalbündel ein digitaler Frequenzmultiplexumsetzer (DFMU) vorgesehen ist, in welchem die mit einer einheitlichen Abtastrate abgetasteten und digitalisierten Signale der Kanäle bzw. Kanalbündel jeweils unter Erhöhung der Abtastrate in interpolierenden digitalen Frequenzumsetzern (IDFU) frequenzumgesetzt und mittels mindestens eines Addierers (CA) zusammengefaßt werden und wobei mehrere solchermaßen frequenzumgesetzten und zusammengefaßten Signale zu dem FDM-Signal zusammengefaßt werden, dadurch gekennzeichnet, daß die frequenzumgesetzten und mittels Addierer (CA) zusammengefaßten Signale in einer zweiten Stufe mittels Gruppenbandfiltern (CGBF) unter weiterer Erhöhung der Abtastrate frequenzumgesetzt und mittels eines weiteren Addierers (RA) zu dem FDM-Signal zusammengefaßt werden. (Fig. 1 und 1b).

2. RF- und TV-Verteilnetz zur Verteilung eines FDM-Signals mit hoher Kanalzahl, mit einer zentralen Station (Z) mit einem digitalen Frequenzmultiplexumsetzer (DFMU), mittels dessen Signale von M-Kanälen bzw. Kanalgruppen mit den Frequenzen f₁ bis f_{M} frequenzumgesetzt und zu dem FDM-Signal zusammengefaßt werden, das in das Netz eingespeist wird, mit weiteren Stationen, in denen das ankommende FDM-Signal so aufbereitet wird, daß die Signale einer Anzahl Ni weiterer Kanäle zusätzlich an freien Frequenzkanälen oder anstelle der Signale frei auswählbarer, besetzter Kanäle in das neue FDM-Signal aufnehmbar sind, und mit Teilnehmereinrichtungen, in denen das FDM-Signal in die einzelnen Kanal- bzw. Kanalgruppensignale so zerlegt bzw. aufbereitet wird, daß der Teilnehmer auf sie zugreifen kann, dadurch gekennzeichnet, daß das Verteilnetz Ringstruktur besitzt, daß in der zentralen Station zusätzlich N Einzelkanalbandfilter (EKBF) vorgesehen sind, welche nur für Einzelkanäle mit den jeweiligen Frequenzen fM + 1 bis fM + N transparent sind und in welche das von der zuführenden Ringseite empfangene FDM-Signal eingespeist wird, und daß die Einzelkanalbandfilter-Ausgangssignale zu dem Ausgangssignal des digitalen Frequenzmultiplexumsetzers (DFMU) hinzuaddiert werden, und daß das Summensignal das FDM-Signal ist, welches in die abgehende Ringseite eingespeist wird (Fig. 4).

3. Verteilnetz nach Anspruch 2, dadurch gekennzeichnet, daß die Einzelkanalbandfilter (EKBF) realisiert sind durch die Kaskade eines dezimierenden digitalen Frequenzumsetzers (DDFU) und eines nachfolgenden interpolierenden digitalen Frequenzumsetzers (IDFU) (Fig. 5a).

4. Verteilnetz nach einem der vorhergehenden Ansprüche, dadurch gekennzeichnet, daß in jeder weiteren Station zur Aufnahme der Signale weiterer Kanäle je ein Drop-Add-Mux (DAMUX) vorgesehen ist, daß dieser DAMUX das ankommende FDM-Signal filtert, indem erwünschte Kanäle durchgelassen werden, freizuhaltende bzw. freizuschaltende Kanäle gesperrt werden, daß die Signale weiterer aufzunehmender Kanäle jeweils in die dafür vorgesehenen freien Frequenzbereiche (f1, f2) umgesetzt und nach Filterung zu dem gefilterten ankommenden FDM-Signal addiert werden, und daß dieses Summensignal das neue FDM-Signal ist.

5. Verteilnetz nach einem der vorhergehenden Ansprüche, dadurch gekennzeichnet, daß in einer oder mehreren der weiteren Stationen das FDM-Signal eine Multiplikation mit einem Verstärkungs-Faktor γ < 1 erfährt.

6. Verteilnetz nach einem der vorhergehenden Ansprüche 4 oder 5 mit 4, dadurch gekennzeichnet, daß der Drop-Add-Multiplexer (DAMUX) zur Sperrung einzelner Kanäle Einzelkanalbandfilter (EKBF) verwendet, die jeweils von dem FDM-Signal gespeist werden, und daß deren Ausgangssignale von dem FDM-Signal subtrahiert werden.

7. Verteilnetz nach Anspruch 6, dadurch gekennzeichnet, daß zur Kompensation der Laufzeit der Einzelkanalbandfilter (EKBF) das FDM-Signal nach der Einspeisung in die einzelnen Einzelkanalbandfilter (EKBF) und vor der Differenzbildung um die gleiche Laufzeit verzögert wird. (Fig. 5b).

8. Verteilnetz nach Anspruch 1 oder einem der Ansprüche 2 bis 7, dadurch gekennzeichnet, daß in den Stationen elektrooptische Sender und optoelektronische Empfänger zur Übertragung des FDM-Signals über Glasfaser (LWL) vorgesehen sind.

9. Verteilnetz nach Anspruch 1 oder einem der vorhergehenden Ansprüche 2 bis 8, dadurch gekennzeichnet, daß in den Stationen Digital-Analog- und Analog-Digital-Umsetzer vorgesehen sind zur analogen Übertragung des FDM-Signals.

10. Verteilnetz nach Anspruch 1, dadurch gekennzeichnet, daß die Erhöhung der Abtastrate nach der Operation Addition erfolgt (Fig. 1b).

## Claims

1. RF and TV distribution network for the distribution of an FDM (Frequency Division Multiplex) signal with a high number of channels, having a (central) station in which signals from M channels or channel groups are subjected to frequency-conversion and combined to form the FDM signal, which is fed into the network, having further stations in which the incoming FDM signal is conditioned in such a way that the signals of a number Ni of further channels can be accepted into the new FDM signal additionally or at free frequency channels or instead of the signals of freely selectable, allocated channels, having subscriber devices in which the FDM signal is split into the individual channel or channel group signals and conditioned in such a way that the subscriber can access them,
in which
a digital frequency division multiplex converter (DFMU) is provided at least in the central station for the frequency conversion and for the combination of the signals of the M channels or channel groups, in which converter the signals of the channels or channel groups, which signals are sampled at a uniform sampling rate and digitized, are subjected to frequency-conversion in each case with an increase in the sampling rate in interpolating digital frequency converters (IDFU) and are combined by means of at least one adder (CA), and in which a plurality of such frequency-converted and combined signals are combined to form the FDM signal, characterized in that the signals which have been subjected to frequency-conversion and combined by means of adders (CA) are subjected to frequency-conversion in a second stage by means of group bandpass filters (CGBF) with a further increase in the sampling rate and are combined by means of a further adder (RA) to form the FDM signal. (Figures 1 and 1b).

2. RF and TV distribution network for the distribution of an FDM signal with a high number of channels, having a central station (Z) having a digital frequency division multiplex converter (DFMU), by means of which signals from M channels or channel groups at the frequencies f₁ to f_{M} are subjected to frequency conversion and combined to form the FDM signal, which is fed into the network, having further stations in which the incoming FDM signal is conditioned in such a way that the signals of a number Ni of further channels can be accepted into the new FDM signal additionally at free frequency channels or instead of the signals of freely selectable, allocated channels, having subscriber devices in which the FDM signal is split into the individual channel or channel group signals and conditioned in such a way that the subscriber can access them, characterized in that the distribution network has a ring structure, in that N single channel bandpass filters (EKBF) are additionally provided in the central station, which filters are transparent only to single channels having the respective frequencies fM + 1 to fM + N and into which filters the FDM signal received from the supplying ring end is fed, and in that the single channel bandpass filter output signals are added to the output signal of the digital frequency division multiplex converter (DFMU), and in that the summation signal is the FDM signal which is fed into the outgoing ring end (Figure 4).

3. Distribution network according to Claim 2, characterized in that the single channel bandpass filters (EKBF) are realized by the cascade of a decimating digital frequency converter (DDFU) and of a downstream interpolating digital frequency converter (IDFU) (Figure 5a).

4. Distribution network according to one of the preceding claims, characterized in that a respective drop-add multiplexer (DAMUX) is provided in each further station for the acceptance of the signals of further channels, in that this DAMUX filters the incoming FDM signal by allowing desired channels to pass and inhibiting channels which are to be kept free or disconnected, in that the signals of further channels to be accepted are in each case converted into the free frequency ranges (f1, f2) provided for them and, after filtering, are added to the filtered, incoming FDM signal, and in that this summation signal is the new FDM signal.

5. Distribution network according to one of the preceding claims, characterized in that, in one or more of the further stations, the FDM signal undergoes multiplication by a gain factor γ < 1.

6. Distribution network according to one of the preceding Claims 4 or 5 with 4, characterized in that the drop-add multiplexer (DAMUX), for inhibiting individual channels, uses single channel bandpass filters (EKBF) which are each fed by the FDM signal, and in that their output signals are subtracted from the FDM signal.

7. Distribution network according to Claim 6, characterized in that in order to compensate for the propagation delay of the single channel bandpass filters (EKBF), the FDM signal is delayed by the same propagation delay after the feeding into the individual single channel bandpass filters (EKBF) and prior to the difference formation. (Figure 5b).

8. Distribution network according to Claim 1 or one of Claims 2 to 7, characterized in that the stations are provided with electro-optical transmitters and optoelectronic receivers for the transmission of the FDM signal via optical fibres (LWL).

9. Distribution network according to Claim 1 or one of the preceding Claims 2 to 8, characterized in that the stations are provided with digital-to-analog and analog-to-digital converters for the analog transmission of the FDM signal.

10. Distribution network according to Claim 1, characterized in that the increase in the sampling rate is effected after the addition operation (Figure 1b).

## Revendications

1. Réseau de radio et télédistribution pour distribuer un signal FDM (Frequency-Division-Multiplex) avec un grand nombre de canaux, comprenant un poste (central) qui effectue une conversion de fréquence des signaux des M canaux ou groupes de canaux et les réunit en un signal FDM introduit dans le réseau, ainsi que d'autres stations dans lesquelles le signal FDM d'entrée est traité pour recevoir les signaux d'un nombre Ni d'autres canaux en plus ou à la place de canaux de fréquence libres ou en remplacement de signaux, pour une sélection libre de canaux occupés dans le nouveau signal FDM, ainsi que des installations de participants dans lesquelles le signal FDM est décomposé en signaux monocanal ou en signaux de groupes de canaux et est traité, pour que le participant puisse accéder à ces signaux,
au moins dans la station centrale, pour la conversion de fréquence et la combinaison des signaux des M canaux ou des faisceaux de canaux, il est prévu un convertisseur à multiplex de fréquence numérique (DFMU) qui effectue la conversion de fréquence des signaux détectés avec un taux de détection unitaire, qui sont numérisés pour des canaux ou des faisceaux de canaux, sont convertis en fréquence avec augmentation du taux de détection dans les convertisseurs de fréquence numériques à interpolation (IDFU), et sont regroupés à l'aide d'au moins un additionneur (CA), et
plusieurs tels signaux convertis en fréquence et regroupés sont réunis en un signal FDM,
caractérisé en ce que
les signaux convertis en fréquence et regroupés par les additionneurs (CA) sont convertis en fréquence dans un second étage à l'aide de filtres à bande de groupe(CGBF) en augmentant de nouveau le taux de détection, et ils sont réunis à l'aide d'un autre additionneur (RA) pour donner un signal FDM (figures 1 et 1b).

2. Réseau de radio et télédistribution pour distribuer un signal FDM avec un nombre élevé de canaux, une station centrale (Z) avec un convertisseur à multiplex de fréquence numérique (DFMU) dont les signaux de M canaux ou groupes de canaux sont convertis en fréquence suivant les fréquences f₁-f_{M} et sont réunis en un signal FDM qui est injecté dans le réseau, ainsi que d'autres stations qui traitent le signal FDM d'entrée pour recevoir les signaux d'un nombre Ni d'autres canaux pour une sélection supplémentaire, à l'emplacement de canaux de fréquences libres ou à la place des signaux de canaux occupés, pour les intégrer dans le nouveau signal FDM, ainsi que des installations de participants qui décomposent et traitent le signal FDM en signaux de canaux ou de groupes de canaux, permettant à l'abonné d'y accéder,
caractérisé en ce que
le réseau de distribution présente une structure en anneau, dans la station centrale on prévoit en outre N filtres à bande monocanal (EKBF) qui ne sont transparents que pour des monocanaux ayant les fréquences respectives fM + 1...fM + N, et dans lesquels le signal FDM, reçu du côté de l'anneau d'entrée, est injecté, et
les signaux de sortie du filtre à bande monocanal sont additionnés au signal de sortie du convertisseur à multiplex de fréquence numérique (DFMU), et
le signal d'addition est le signal FDM qui est injecté dans le côté de sortie de l'anneau (fig. 4).

3. Réseau de distribution selon la revendication 2,
caractérisé en ce que
les filtres à bande monocanal (EKBF) sont réalisés par la mise en cascade d'un convertisseur de fréquence numérique à décimation (DDFU) et d'un convertisseur de fréquence numérique à interpolation en aval (IDFU) (fig. 5a).

4. Réseau de distribution selon l'une quelconque des revendications précédentes,
caractérisé en ce que
dans chaque autre station il est prévu chaque fois un multiplexeur suppression/addition (DAMUX) pour recevoir les signaux d'autres canaux,
ce multiplexeur (DAMUX) filtre le signal FDM d'entrée en laissant passer les canaux souhaités et en bloquant les canaux à laisser libre ou à libérer,
les signaux d'autres canaux à recevoir sont convertis dans les plages de fréquences (f1, f2) libres prévues à cet effet et, après filtrage, ces signaux sont additionnés au signal FDM filtré, d'entrée, et
- ce signal de somme est le nouveau signal FDM.

5. Réseau de distribution selon l'une quelconque des revendications précédentes,
caractérisé en ce que
dans une ou plusieurs autres stations, le signal FDM est soumis à une multiplication par un coefficient d'amplification γ < 1.

6. Réseau de distribution selon l'une quelconque des revendications 4 ou 5 combiné à 4,
caractérisé en ce que
le multiplexeur suppression/addition (DAMUX) utilise des filtres à bande monocanal (EKBF) pour bloquer certains canaux, ces filtres recevant chacun le signal FDM, et les signaux de sortie sont soustraits du signal FDM.

7. Réseau de distribution selon la revendication 6,
caractérisé en ce que
pour compenser le temps de parcours des filtres à bande monocanal (EKBF), après introduction du signal FDM dans les différents filtres à bande monocanal (EKBF) et avant de former la différence, on retarde ce signal d'une durée égale au temps de parcours. (fig. 5b).

8. Réseau de distribution selon la revendication 1 ou l'une des revendications 2 à 7,
caractérisé en ce que
les stations comportent des émetteurs électrooptiques ou des récepteurs optoélectroniques pour transmettre le signal FDM par des fibres optiques (LWL).

9. Réseau de distribution selon la revendication 1 ou l'une des revendications 2 à 8,
caractérisé en ce que
les stations comportent des convertisseurs numériques/analogiques et analogiques/numériques pour la transmission analogique du signal FDM.

10. Réseau de distribution selon la revendication 1,
caractérisé en ce qu'
on augmente le taux de détection après l'opération d'addition (fig. 1b).
